# EUROPÄISCHE PATENTANMELDUNG

(11) **EP 2 722 553 A2**
(43) Veröffentlichungstag der Anmeldung: **23.04.2014**
(21) Anmeldenummer: 13188511.3
(22) Anmeldetag: 14.10.2013
(51) Int. Cl.: F16F 15/12, F16F 15/129

(54) **Drehschwingungsdämpfungsanordnung mit Schwingungsdämpfung**

(30) Priorität: 17.10.2012 DE 102012218923
(71) Anmelder: ZF Friedrichshafen AG, 88038 Friedrichshafen (DE)
(72) Erfinder: Dögel, Thomas, 97720 Nüdlingen (DE); Grossgebauer, Uwe, 97250 Erlabrunn (DE); Orlamünder, Andreas, 97453 Schonungen (DE)

(57) **Zusammenfassung**

Eine Drehschwingungsdämpfungsanordnung (10) umfasst eine um eine Drehachse drehbare Trägeranordnung (12), eine zu der Trägeranordnung (12) in einer Umfangsrichtung (13) relativ bewegliche Auslenkungsmasse (34) und eine Mehrzahl von sich radial erstreckenden elastisch deformierbaren Rückstellelementen (42), mittels derer die Trägeranordnung (12) und die Auslenkungsmasse (34) relativ zueinander verdrehbar gekoppelt sind. Eine Reibeinrichtung (80; 104; 116; 164) ist zwischen der Trägeranordnung (12) und der Auslenkungsmasse (34) angeordnet, um bei einer Relativverdrehung zwischen der Trägeranordnung (12) und der Auslenkungsmasse (34) eine die Verdrehung hemmende Reibungskraft zwischen der Trägeranordnung (12) und der Auslenkungsmasse (34) zu erzeugen.

## Beschreibung

Ausführungsbeispiele der vorliegenden Erfindung befassen sich mit Drehschwingungsdämpfungsanordnungen, insbesondere mit Drehschwingungsdämpfungsanordnungen für einen Antriebsstrang eines Fahrzeugs, bei denen zwischen einer um eine Drehachse drehbaren Trägeranordnung und einer zu der Trägeranordnung in der Umfangsrichtung relativ beweglichen Auslenkungsmasse ein oder eine Mehrzahl von sich radial erstreckenden elastisch deformierbaren Rückstellelementen angeordnet ist.

Zur Erhöhung des Fahrkomforts bzw. zur weiteren Unterdrückung von Schwingungen im Antriebsstrang werden häufig drehmomentübertragende Torsionsschwingungsdämpfer und darüber hinaus auch sogenannte Schwingungstilger bzw. Drehschwingungsdämpfungsanordnungen verbaut. Bei solchen Schwingungstilgern bzw. Tilgern handelt es sich, allgemein gesprochen, um Zusatzmassen, die über ein Federsystem bzw. über Rückstellelemente an das Antriebssystem bzw. den Torsionsschwingungsdämpfer angekoppelt werden. Die Wirkungsweise eines Schwingungstilgers beruht dabei beispielsweise darauf, dass ein schwingungsfähiges System, das aus einer Hauptmasse und einer Zusatzmasse besteht, bezüglich seiner Eigenfrequenz so abgestimmt ist, dass bei einer bestimmten Erregerfrequenz die nachfolgend auch als Tilgergewicht oder Auslenkungsmasse bezeichnete Zusatzmasse eine erzwungene Schwingung ausführt, während die Hauptmasse in Ruhe bleibt, so dass solche Schwingungsfrequenzen effizient unterdrückt werden können.

Um die Schwingungsunterdrückung über einen größeren Drehzahlbereich zu erreichen, werden drehzahladaptive Schwingungstilger bzw. Tilger verwendet, deren Eigenfrequenz bzw. Resonanzfrequenz sich drehzahlabhängig, beispielsweise proportional zur Drehzahl, ändert. Unter einem Schwingungstilger bzw. einer Drehschwingungsdämpfungsanordnung wird hierin mithin eine Einrichtung bzw. Vorrichtung oder Anordnung von Komponenten verstanden, mittels derer kein Drehmoment übertragen wird, und die in der Lage ist, bei einer bestimmten, möglicherweise veränderlichen Schwingungsfrequenz Energie aus dem Antriebsstrang zu entnehmen, um bei dieser Frequenz auftretende Drehschwingungen zu unterdrücken.

Um die erforderliche Schwingungsdämpfung zu ermöglichen, werden teilweise erhebliche Zusatzmassen bzw. schwingende Auslenkungsmassen verbaut, wobei die Gefahr besteht, dass bei großer Anregung ein Winkel der relativen Verdrehung zwischen der Auslenkungsmasse und einem mit dem Antrieb verbundenen Träger so groß wird, dass die Auslenkungsmassen an mechanischen Sicherheitsanschlägen anschlagen, also den Bereich, der mittels der rückstellenden Kraft der Rückstellelemente bewältigt werden kann, überschreiten. Dies führt zum einen zu lauten Geräuschen und kann, bei wiederholtem Auftreten, durch die teilweise erheblichen Impulsüberträge der großen Auslenkungsmassen zu einer Zerstörung einer solchen Drehschwingungsdämpfungsanordnung bzw. eines solchen Schwingungstilgers führen.

Es besteht somit das Bedürfnis, verbesserte Drehschwingungsdämpfungsanordnungen zur Verfügung zu stellen, die im Hinblick auf große Anregungen weniger kritisch sind.

Ausführungsbeispiele der vorliegenden Erfindung ermöglichen dies bei einer Drehschwingungsdämpfungsanordnung mit einer um eine Drehachse drehbaren Trägeranordnung, einer zu der Trägeranordnung in einer Umfangsrichtung relativ beweglichen Auslenkungsmasse und eine Mehrzahl von sich radial erstreckenden elastisch deformierbaren Rückstellelementen, mittels derer die Trägeranordnung und die Auslenkungsmasse relativ zueinander verdrehbar gekoppelt sind, indem zwischen der Trägeranordnung und der Auslenkungsmasse eine die Relativverdrehung hemmende Reibungskraft mittels einer Reibeinrichtung erzeugt wird. Das heißt, eine Schwingung der Auslenkungsmasse relativ zu der Trägeranordnung kann kontrolliert gedämpft werden, indem mittels einer von der Reibeinrichtung erzeugten Reibung dem System Energie entzogen wird, sodass eine zu große Relativverdrehung zwischen Auslenkungsmasse und Trägeranordnung verhindert werden kann. Dies wiederum kann das Anschlagen der Auslenkungsmasse an mechanischen Begrenzungen und somit das Erzeugen von einen Benutzer verunsichernden Geräuschen sowie das Auftreten einer Zerstörung von den Komponenten der Drehschwingungsdämpfungsanordnung verhindern.

Gemäß einigen Ausführungsbeispielen der vorliegenden Erfindung bewirkt die Reibeinrichtung eine Reibungskraft zwischen der Trägeranordnung und der Auslenkungsmasse nur außerhalb eines Freiwinkelbereichs einer Relativverdrehung zwischen der Trägeranordnung und der Auslenkungsmasse. Das heißt, eine Schwingung wird nur außerhalb des Freiwinkelbereichs gedämpft, also für Schwingungsamplituden, die einer Relativverdrehung zwischen der Auslenkungsmasse und der Trägeranordnung entsprechen, die über den Freiwinkelbereich hinaus gehen. Das Verwenden einer solchen auch als Spielreibeinrichtung bezeichneten Reibeinrichtung führt dazu, dass die Reibung erst ab einem durch das Spiel voreingestellten Freiwinkel wirkt, während die Drehschwingungsdämpfungsanordnung bzw. der Tilger innerhalb des Freiwinkelbereichs reibungsfrei bzw. ohne Dämpfung frei schwingen kann. Dies kann bei hohen Drehzahlen und den damit einhergehenden hohen zu dämpfenden Frequenzen der Drehungleichförmigkeit aufgrund der spezifischen Massenkräfte beispielsweise beim Vier-Zylinder-Motor als Antriebsaggregat zu besonders großer Dämpfungswirkung führen.

Gemäß einigen Ausführungsbeispielen ist der Freiwinkelbereich beispielsweise 10 Grad, bzw. kleiner als 10 Grad oder als 8 Grad, d. h. das Erzeugen einer Reibung findet beispielsweise erst ab einer Relativverdrehung von +/- 5 Grad zwischen der Auslenkungsmasse und der Trägeranordnung statt. Eine solche Auslegung kann zum einen ein freies Schwingen der Drehschwingungsdämpfungsanordnung bei kleinen Auslenkungen gewährleisten und zum anderen effizient bei einer größeren Anregung eine Dämpfung der Schwingung durch den Entzug von mittels der Reibeinrichtung erzeugter Energie aus dem schwingungsfähigen System verursachen, sodass große Winkelausschläge und die damit einhergehende mögliche Zerstörung bzw. das Erzeugen von Anschlaggeräuschen in der Schwingungsdämpfungsanordnung verhindert werden können.

Gemäß alternativen Ausführungsbeispielen ist die Reibeinrichtung innerhalb des gesamten Bereichs von relativen Verdrehungswinkeln zwischen der Auslenkungsmasse und der Trägeranordnung aktiv, d. h. eine Schwingung zwischen der Trägeranordnung und der Auslenkungsmasse wird permanent und unabhängig von dem relativen Verdrehwinkel gedämpft. Eine solche spielfreie Reibeinrichtung ermöglicht es, Drehschwingungsdämpfungsanordnungen bereit zu stellen, die über einen breiteren Frequenz- oder Ordnungsbereich der Anregung von Drehungleichförmigkeiten wirksam sind. Beispielsweise kann ein Winkel der Relativverdrehung zwischen der Auslenkungsmasse und der Trägeranordnung bzw. eine Amplitude der Schwingung bei kleinen Drehzahlen groß und bei großen Drehzahlen klein sein.

Gemäß einigen Ausführungsbeispielen der vorliegenden Erfindung ist der Freiwinkelbereich von der Drehzahl der Trägeranordnung abhängig, sodass je nach aktueller Drehzahl des Antriebsstrangs der Bereich, in dem die Drehschwingungsdämpfungsanordnung ideal frei schwingen kann, drehzahladaptiv angepasst werden kann. Dadurch kann die Wirkungsweise der Drehschwingungsdämpfungsanordnung bei jederzeit gegebener Zerstörungssicherheit in den diesbezüglich unkritischen Drehzahlbereichen optimiert werden.

Um einen drehzahlabhängigen Freiwinkelbereich zu ermöglichen, weist gemäß einigen Ausführungsbeispielen der Erfindung ein einem Rückstellelement zugeordnetes, radial relativ zu diesem bewegliches Abstützelement, mittels dessen das Rückstellelement an der radialen Position des Abstützelements in der Umfangsrichtung bezüglich der Trägeranordnung abgestützt wird, eine sich in der axialen Richtung erstreckende Nase auf. Die Nase greift in eine sich in der radialen Richtung erstreckende Ausnehmung eines Mitnahmebauteils ein, das mit einem Reibring drehfest verbunden ist, der an einer Gegenfläche anliegt, die mit der Auslenkungsmasse drehfest verbunden bzw. gekoppelt ist. Das unter dem Einfluss der Fliehkraft radial nach außen bewegliche bzw. sich radial nach außen bewegende Rückstellelement definiert dadurch die radiale Position, an der sich die Nase innerhalb des Mitnahmebauteils befindet, sodass durch eine Kontur des Mitnahmebauteils der Freiwinkelbereich in Abhängigkeit vom radialen Abstand des Abstützelements und mithin in Abhängigkeit von der Drehzahl vorgegeben werden kann.

Um zu gewährleisten, dass die Amplitude der Schwingung bei hohen Drehzahlen bereits ab einem kleineren Freiwinkelbereich gedämpft werden kann, wird gemäß einigen Ausführungsbeispielen die Ausdehnung der Ausnehmung in der Umfangsrichtung mit zunehmendem radialen Anstand nach außen geringer.

Gemäß einigen Ausführungsbeispielen der Erfindung ist die mittels der Reibeinrichtung erzeugte Reibungskraft von der Drehzahl der Trägeranordnung abhängig. Dadurch kann eine Stärke der Dämpfung in Abhängigkeit von der Reibung derart dimensioniert werden, dass eine Dämpfung erst in kritischen Drehzahlbereichen, bei denen die Drehschwingungsdämpfungsanordnung vor zu großen Winkelausschlägen der Auslenkungsmassen geschützt werden muss, erfolgt. Auch ermöglicht dies, Drehzahlbereiche festzulegen, in denen die Drehschwingungsdämpfungsanordnung nicht mehr wirksam sein soll, in denen also die Auslenkungsmasse und die Trägereinheit starr miteinander gekoppelt werden sollen, was durch eine hohe Reibung der Reibeinrichtung erzielt werden kann.

Gemäß einigen Ausführungsbeispielen wird die von der Reibeinrichtung erzeugte Reibung hydraulisch erzeugt, beispielsweise durch die Schleppmomente zwischen zwei scheibenförmigen Elementen, die sich auf gegenüberliegenden Seiten eines axialen Spalts befinden, welcher mit einer das Moment erzeugenden Flüssigkeit gefüllt ist. Dies kann zu einer Bedämpfung der Schwingung bzw. zu einem Erzeugen einer Reibungskraft ohne mechanischen Verschleiß führen, was zu einer erhöhten Langlebigkeit der Drehschwingungsdämpfungsanordnung und zu einer hohen Konstanz der Dämpfungseigenschaften der Drehschwingungsdämpfungsanordnung über die Lebensdauer beitragen kann.

Ausführungsbeispiele der vorliegenden Erfindung umfassen auch einen Antriebsstrang für ein Fahrzeug, der wenigstens eine Drehschwingungsdämpfungsanordnung der oben beschriebenen Art umfasst. Gemäß einigen Ausführungsbeispielen umfasst ein solcher Antriebsstrang zumindest wenigstens ein weiteres der folgenden Elemente im Bereich eines Anfahrelements: einen hydrodynamischen Drehmomentwandler oder eine Fluidkupplung, eine nass oder trocken laufende Reibungskupplung, sodass ein Drehmomentfluss im Antriebsstrang unterbrochen und wiederhergestellt werden kann.

Gemäß einigen Ausführungsbeispielen, bei denen ein Drehschwingungsdämpfer mit einer Primärseite und einer gegen die Rückstellwirkung einer Federanordnung bezüglich der Primärseite drehbaren Sekundärseite im Antriebsstrang angeordnet ist, ist die Trägeranordnung der Drehschwingungsdämpfungsanordnung drehfest an die Sekundärseite des Drehschwingungsdämpfers angebunden. Die Anordnung nach einem Drehschwingungsdämpfer kann den Vorteil haben, dass die Eigenfrequenz des Schwingungsreduzierungssystems sehr niedrig liegt, was dazu führen kann, dass die Restanregung, die die Drehschwingungsdämpfungsanordnung nach dem Drehschwingungsdämpfer noch tilgen soll, sehr klein ist. Dies kann es wiederum ermöglichen, die Drehschwingungsdämpfungsanordnung sehr leicht zu konstruieren.

Die Anbindung an die Sekundärseite des Drehschwingungsdämpfers wird bei alternativen Ausführungsbeispielen auch dann vorgenommen, wenn der Drehschwingungsdämpfer zweistufig ist, also eine erste und eine zweite Federanordnung aufweist, wobei ein Zwischenelement gegen die Rückstellwirkung der ersten Federanordnung bezüglich der Primärseite drehbar ist und wobei die Sekundärseite gegen die Rückstellwirkung der zweiten Federanordnung bezüglich dem Zwischenelement drehbar ist.

Bei alternativen Ausführungsbeispielen ist die Trägeranordnung der Drehschwingungsdämpfungsanordnung drehfest an das Zwischenelement des Drehschwingungsdämpfers angebunden. Eine solche Anordnung im Antriebsstrang kann beispielsweise dann vorteilhaft sein, wenn aufgrund der Massen- und Steifigkeitsverhältnisse des gesamten Antriebsstrangs, also der Verbindung zwischen den Komponenten Antriebsmotor, Getriebe, Kardanwelle, Differenzial, Seitenwellen, Räder und auch deren Anbindung an die Karosserie, unmittelbar hinter den beiden Federsätzen bzw. den Federanordnungen des Drehschwingungsdämpfers ein Schwingungsknoten entsteht. Ein solcher hat zur Folge, dass eine Anregung einer Drehschwingungsdämpfungsanordnung an dieser Position mangels signifikanter Schwingungsamplituden an dieser Position kaum mehr erfolgt. Beispielsweise eine solche Konstellation kann wirkungsvoll vermieden werden, wenn die Drehschwingungsdämpfungsanordnung drehfest an das Zwischenelement des Drehschwingungsdämpfers angebunden ist.

Nachfolgend werden, Bezug nehmend auf die beigefügten Figuren, Ausführungsbeispiele der vorliegenden Erfindung näher erläutert.

Es zeigen:
- Fig. 1a-e: ein Beispiel für eine Drehschwingungsdämpfungsanordnung;
- Fig. 2: eine Schnitt durch ein Ausführungsbeispiel einer Drehschwingungsdämpfungsanordnung mit einer Reibeinrichtung;
- Fig. 3: eine Reibscheibe zur Verwendung in dem Ausführungsbeispiel der Fig. 2;
- Fig. 4: eine Ansicht auf eine Trägerscheibe zur Verwendung im Ausführungsbeispiel der Fig. 2;
- Fig. 5: eine Ansicht auf eine weitere Trägerscheibe zur Verwendung in einem weiteren Ausführungsbeispiel der vorliegenden Erfindung;
- Fig. 6: eine Ansicht auf und eine Schnittdarstellung durch ein weiteres Ausführungsbeispiel der vorliegenden Erfindung mit einer Reibeinrichtung mit drehzahlabhängigem Freiwinkelbereich;
- Fig. 7: eine vergrößerte Ansicht der Reibeinrichtung der Fig. 6 in einem alternativen Betriebszustand mit höherer Rotationsgeschwindigkeit;
- Fig. 8: eine Schnittansicht durch ein Ausführungsbeispiel der vorliegenden Erfindung mit einer Reibeinrichtung, die eine hydraulische Dämpfungsanordnung umfasst;
- Fig. 9: eine Ansicht auf ein Ausführungsbeispiel einer Drehschwingungsdämpfungsanordnung mit einer Reibeinrichtung, die eine drehzahlabhängige Reibungskraft erzeugt;
- Fig. 10: eine Ansicht auf das Ausführungsbeispiel der Fig. 9 bei einer höheren Rotationsgeschwindigkeit;
- Fig. 11: eine schematische Darstellung eines Antriebsstrangs mit einem Ausführungsbeispiel einer Drehschwingungsdämpfungsanordnung;
- Fig. 12: eine schematische Darstellung eines weiteren Antriebsstrangs eines Fahrzeugs mit einem Ausführungsbeispiel einer Drehschwingungsdämpfungsanordnung;
- Fig. 13: einen Schnitt durch eine konstruktive Ausführungsform des in Fig. 11 schematisch skizzierten Ausführungsbeispiels;
- Fig. 14: eine schematische Darstellung eines Antriebsstrangs mit einem hydraulischen Anfahrelement und einem Ausführungsbeispiel einer Drehschwingungsdämpfungsanordnung; und
- Fig. 15: einen Schnitt durch eine konstruktive Ausführungsform des in Fig. 14 gezeigten Prinzips.

Beispielhafte Ausführungsbeispiele werden nun in Bezugnahme auf die beigefügten Figuren beschrieben. Dabei wird vorab darauf hingewiesen, dass die Figuren nicht notwendigerweise maßstabsgetreu gezeichnet sind und dass, um gewisse Merkmale oder Eigenschaften hervorzuheben, bestimmte Komponenten durch Verwendung einer anderen Strichstärke oder Schraffur künstlich hervorgehoben sein können.

Es wird explizit darauf hingewiesen, dass weitere Ausführungsbeispiele durch die in den nachfolgenden Figuren gezeigten speziellen Implementierungen nicht eingeschränkt werden sollen. Insbesondere soll die Tatsache, dass bestimmte Funktionalitäten in den folgenden Figuren bezüglich spezieller Entitäten, spezifischer Funktionsblöcke oder spezifischer Vorrichtungen beschrieben werden, nicht so ausgelegt werden, dass diese Funktionalitäten in weiteren Ausführungsbeispielen auf dieselbe Art und Weise verteilt sein sollen oder gar müssen. In weiteren Ausführungsbeispielen mögen bestimmte, nachfolgend getrennten Bauteilen oder Einheiten zugeordnete Funktionalitäten in einem einzigen Bauteil bzw. in einem einzigen funktionalen Element zusammengefasst sein oder hierin als in einem einzigen Element vereinte Funktionalitäten können in getrennten funktionalen Einheiten oder durch mehrere separate Bauteile ausgeführt werden.

Ferner wird darauf hingewiesen, dass, wenn ein spezielles Element oder Bauteil als mit einem anderen Element verbunden, mit diesem gekoppelt oder an dieses angebunden bezeichnet wird, damit nicht notwendigerweise gemeint ist, dass dieses unmittelbar und direkt mit dem anderen Bauteil verbunden, gekoppelt oder an dieses angebunden sein soll. Sofern dies gemeint ist, wird darauf explizit hingewiesen, indem beschrieben ist, dass das Element mit dem weiteren Element direkt verbunden, direkt gekoppelt oder direkt an dieses angebunden ist. Dies bedeutet, dass keine dazwischenliegenden, eine indirekte Kopplung bzw. Verbindung oder Anbindung vermittelnde weiteren Elemente vorhanden sind. Darüber hinaus bezeichnen in den nachfolgenden Figuren identische Bezugszeichen identische, funktionsidentische oder funktionsähnliche Komponenten, die also zwischen den unterschiedlichen nachfolgend beschriebenen exemplarischen Ausführungsbeispielen einander substituierend ausgetauscht werden können. Daher kann auch zur detaillierten Beschreibung eines solchen Bauteils, das in einer Figur dargestellt ist, auf die Beschreibung des dazu korrespondierenden Bauteils bzw. Bauelements in einer anderen Figur zurückgegriffen werden.

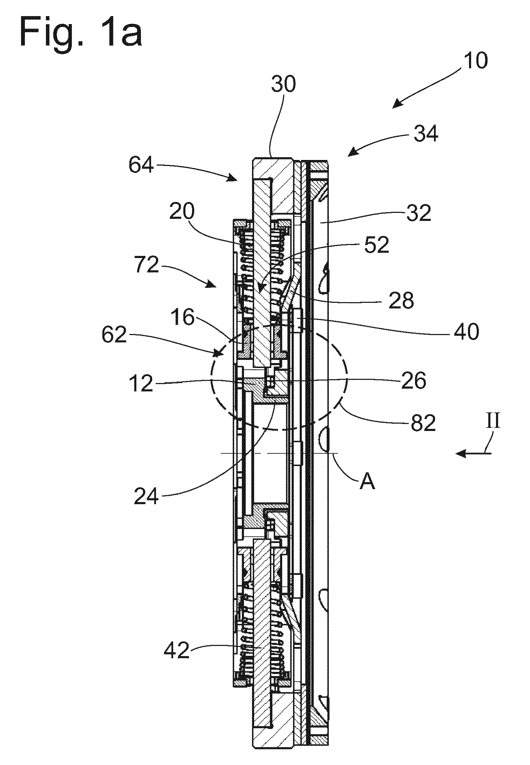

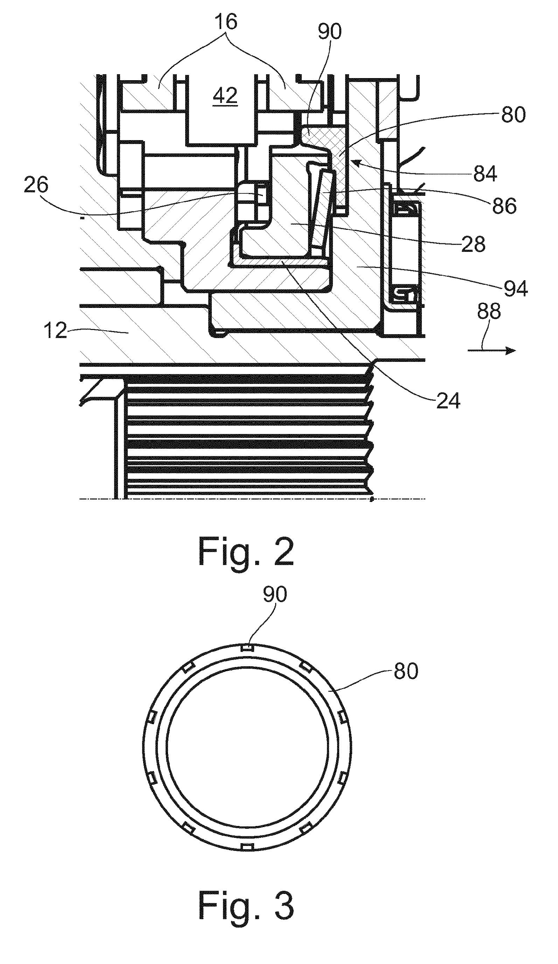

Bevor nachfolgend anhand der Figuren 2 bis 13 Ausführungsbeispiele der vorliegenden Erfindung dargestellt werden, wird anhand der Figuren 1a bis 1e zunächst zum besseren Verständnis des Kontexts der Erfindung ein Beispiel einer herkömmlichen Drehschwingungsdämpfungsanordnung beschrieben.

Die Fig. 1a bis e zeigen ein Beispiel einer allgemein mit 10 bezeichnete Drehschwingungsdämpfungsanordnung, welche zur Erfüllung der Funktionalität eines drehzahladaptiven Tilgers in einen Antriebsstrang eines Fahrzeugs integriert bzw. an diesen angekoppelt werden kann. Die Drehschwingungsdämpfungsanordnung 10 umfasst einen durch Verschraubung an einer Antriebsstrangkomponente zur gemeinsamen Drehung damit um eine Drehachse A festzulegenden Träger 12. In diesem Träger 12 sind in den Darstellungen entlang einer Umfangsrichtung 13 an mehreren Umfangspositionen vorzugsweise mit näherungsweise gleichmäßigem Umfangsabstand Führungen 14 vorgesehen, in welchen als Fliehgewichte wirksame Abstützelemente 16 radial bewegbar aufgenommen sind. Die Führungen 14 sind als im Wesentlichen radial sich erstreckende, langlochartige Aussparungen ausgebildet, welche nach radial innen hin durch eine radial innere Basislage der Abstützelemente 16 definierende Anschläge 18 begrenzt sind. Die Abstützelemente 16 sind durch als Schraubendruckfedern ausgebildete Vorspannfedern 20 nach radial innen zur Anlage an den Anschlägen 18, also in ihre und in ihrer Basislage vorgespannt gehalten. Dabei stützen die Vorspannfedern 20 sich an einem radial äußeren ringartigen Randbereich 22 des Trägers 12 ab.

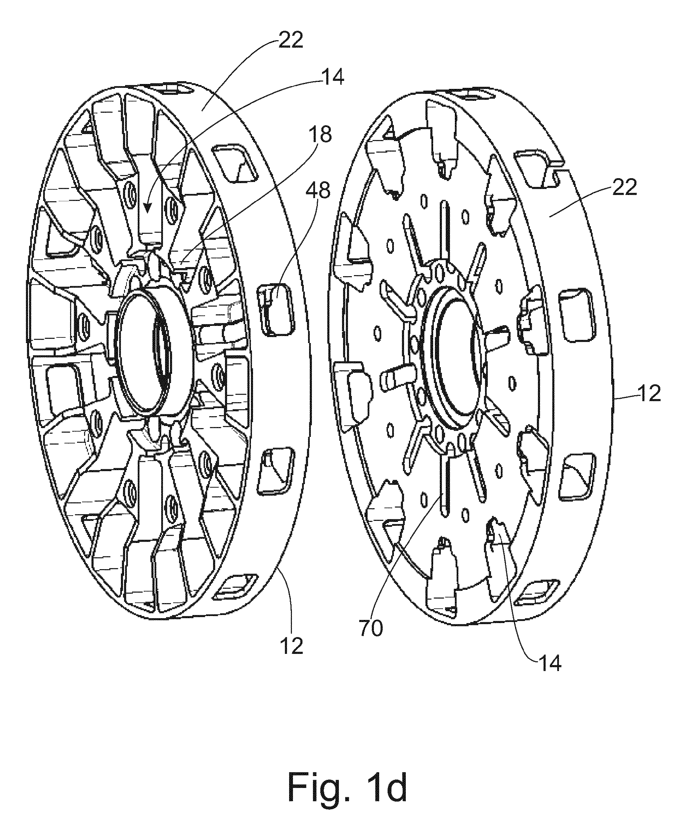

Am Träger 12 ist über ein Radiallager 24 und ein Axiallager 26 eine Trägerscheibe 28 um die Drehachse A bezüglich des Trägers 12 grundsätzlich drehbar getragen. In ihrem radial äußeren Bereich trägt die Trägerscheibe 28 beispielsweise durch Verschraubung an einer axialen Seite einen Massering 30. An der anderen axialen Seite kann beispielsweise ein weiterer Massering 32 festgelegt sein. Die Trägerscheibe 28 bildet zusammen mit dem Massering 30 und ggf. auch dem Massering 32 eine allgemein mit 34 bezeichnete Auslenkungsmasse. Durch eine Mehrzahl von in Umfangsrichtung 13 langgestreckte Aussparungen 36 durchgreifenden und einen Axialsicherungsring 38 an der vom Träger 12 abgewandten Seite der Trägerscheibe 28 haltenden Bolzen 40, beispielsweise Schraubbolzen, ist die Trägerscheibe 28 und somit die Auslenkungsmasse 34 axial am Träger 12 gesichert. Durch das Umfangsbewegungsspiel der Bolzen 40 in den Aussparungen 36 der Trägerscheibe 28 ist die Auslenkungsmasse 34 in entsprechendem Umfangsbewegungsspiel bezüglich des Trägers um die Drehachse A drehbar, so dass durch Zusammenwirkung der Bolzen 40 mit den Aussparungen 36 eine Relativdrehwinkelbegrenzung bereitgestellt ist. Ähnlich wie die Auslenkungsmasse 34 kann auch der Träger 12, anders als in Fig. 1d schematisch dargestellt, aus mehreren Einzelteilen bestehen, sodass die Bezeichnung Trägeranordnung zutreffender wäre. Daher werden im Folgenden die Begriffe Träger und Trägeranordnung synonym verwendet, wobei darunter allgemein derjenige Teil der Drehschwingungsdämpfungsanordnung verstanden werden soll, der in Umfangsrichtung relativ zu der Auslenkungsmasse 34 beweglich ist. Mit anderen Worten ist hierin als Trägeranordnung diejenige Anzahl von Komponenten zu verstehen, die mit dem Träger 12 drehfest verbunden sind, die sich also in ihrer Gesamtheit bezüglich der Auslenkungsmasse 34 in der Umfangsrichtung bewegen lassen

Die Auslenkungsmassenanordnung 34 ist mit dem Träger 12 durch eine Mehrzahl von in Umfangsrichtung 13 aufeinander folgenden, im Wesentlichen radial sich erstreckenden Rückstellelementen 42 zur Kraftübertragung gekoppelt. Diese hier beispielsweise als Blattfedern bzw. allgemein als Biegebalken ausgebildeten Rückstellelemente 42 sind in ihrem radial äußeren Bereich am Massering 30 festgelegt. Ausgehend von dieser Festlegung erstrecken sie sich nach radial innen durch Öffnungen im Randbereich des Trägers 12 hindurch in eine jeweilige Vorspannfeder 20 hinein.

Dabei erstreckt sich jedes Rückstellelement 42 mit seinem radial inneren Endbereich 50 in eine zentrale Öffnung eines zugeordneten Abstützelements 16 hinein bzw. durch dieses hindurch. Im Bereich der Öffnung 52 sind am Abstützelement 16 in seitlichem Abstand zueinander zwei beispielsweise an Stiften 54, 56 bereitgestellte Umfangsabstützbereiche 58, 60 vorgesehen, an welchen das Rückstellelement in Anlage kommt, sodass dieses an der momentanen radialen Position des Abstützelements 16 in- und entgegen der Umfangsrichtung bezüglich der Trägeranordnung bzw. dem Träger 12 abgestützt wird.

Diese Umfangsabstützbereiche 58, 60, welche in Umfangsrichtung beidseits des radial inneren Bereichs 50 des zugeordneten Rückstellelements 42 liegen, definieren in ihrer Gesamtheit einen Trägerabstützbereich, wohingegen derjenige Bereich, in welchem der radial äußere Endbereich des Rückstellelements 42 am Massering 32 bzw. allgemein an der Auslenkungsmasse 34 festgelegt ist, als Auslenkungsmassenabstützbereich bezeichnet werden kann. Das Rückstellelement 42 kann zwischen den beiden Umfangsabstützbereichen 58, 60 mit Bewegungsspiel aufgenommen sein, um eine unter Fliehkrafteinwirkung auftretende Radialbewegung des Abstützelements 16 in der zugeordneten Führung 14 im Träger 12 zu ermöglichen. Um bei dieser Radialbewegung ein Verkippen des Abstützelements 16 zu verhindern, kann dieses an seinen beiden axial orientierten Seiten Seitenführungsvorsprünge aufweisen, welche in zugeordnete, sich im Wesentlichen radial erstreckende Führungsaussparungen des Trägers 12 bzw. 71 der Trägerscheibe 28 hinein erstrecken und darin radial bewegbar geführt bzw. aufgenommen sind. Um insbesondere durch Wechselwirkung des Führungsvorsprungs 68 mit der Trägerscheibe 28 deren Relativdrehbarkeit bezüglich des Trägers 12 nicht zu beeinträchtigen, können die Aussparungen 71 an der Trägerscheibe eine größere Umfangsbreite aufweisen als die Aussparungen im Träger 12. Weiter kann ein unter Fliehkrafteinwirkung auftretendes Verkippen des Abstützelements 16 dadurch verhindert werden, dass dessen Massenschwerpunkt M näherungsweise zentral in der Öffnung 52 liegt.

Bei der vorangehend mit Bezug auf die Fig. 1a bis 1e hinsichtlich ihres konstruktiven Aufbaus erläuterten Drehschwingungsdämpfungsanordnung 10 bildet jeweils ein im Träger 12 bzw. in einer relativ zu der Auslenkungsmasse verdrehbaren Trägeranordnung radial bewegbar geführtes Abstützelement 16, das mit dieser zusammenwirkende Rückstellelement 42, die das Abstützelement 16 nach radial innen in seine Basislage vorspannende Vorspannfeder 20 und die Auslenkungsmasse 34 jeweils eine Auslenkungsmassenpendeleinheit 72. Dabei sind in der dargestellten Ausgestaltungsform insgesamt zehn derartige Auslenkungsmassenpendeleinheiten 72 vorgesehen, wobei der Träger 12 ein gemeinsamer Träger 12 für die Abstützelemente 16 aller Auslenkungsmassenpendeleinheiten 72 ist und die Auslenkungsmasse 34 eine gemeinsame Auslenkungsmasse 34 für alle Auslenkungsmassenpendeleinheiten 72 ist. Die Prinzipien der nachfolgend beschriebenen Erfindung können grundsätzlich jedoch auch realisiert sein, wenn in Zuordnung zu jeder oder zumindest einem Teil der Auslenkungsmassenpendeleinheiten 72 ein separater bzw. eigenständiger Träger vorgesehen ist oder/und wenn in Zuordnung zu allen oder einem Teil der Auslenkungsmassenpendeleinheiten 72 eine eigenständige Auslenkungsmasse vorgesehen ist. Aus Gründen der Stabilität und zum Vermeiden ungewünschter Schwingungszustände bzw. zum Erhalt eines synchronen Schwingungsverhaltens aller Auslenkungsmassenpendeleinheiten 72 kann zumindest die Zusammenfassung aller Auslenkungsmassen zu einer gemeinsamen, ringartigen Auslenkungsmasse 34 vorteilhaft sein.

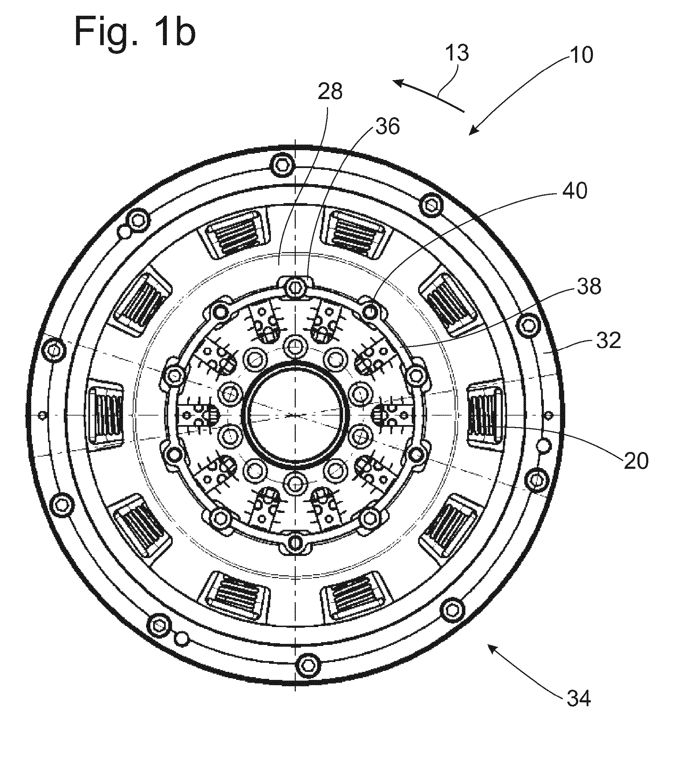

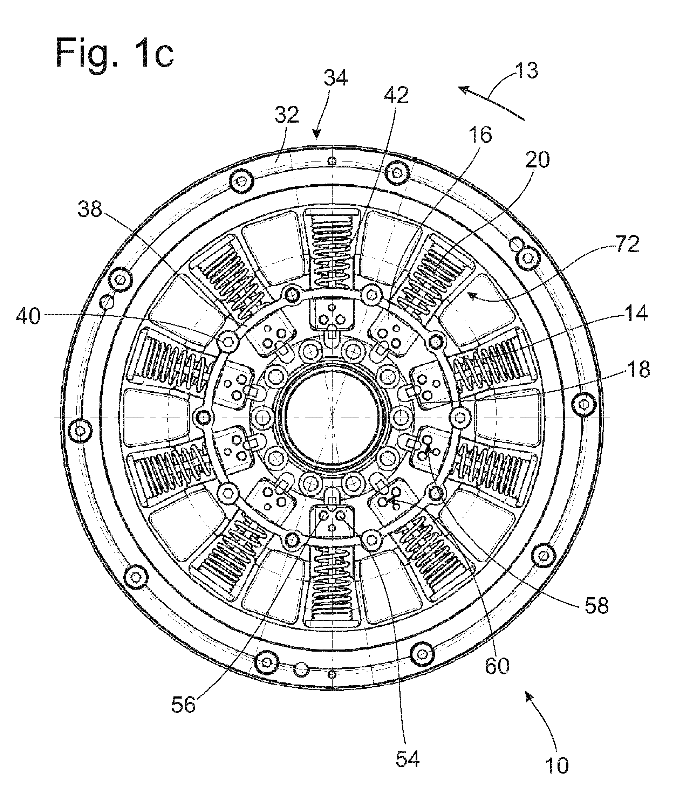

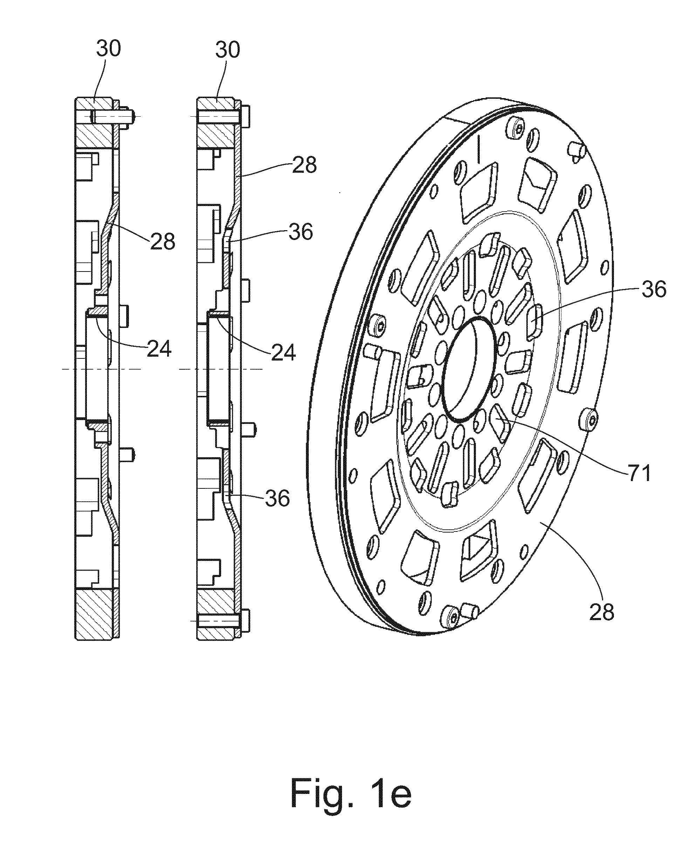

Die Fig. 2 zeigt eine Ausschnittsvergrößerung eines Bereichs eines Ausführungsbeispiels der vorliegenden Erfindung. Das Ausführungsbeispiel entspricht dabei im Wesentlichen dem in Fig. 1 in der korrespondierenden Schnittansicht gezeigten Drehschwingungsdämpfungsanordnung und unterscheidet sich primär durch das zusätzliche Vorhandensein einer Reibeinrichtung zwischen der Trägeranordnung bzw. dem Träger 12 und der Auslenkungsmasse 34, die relativ zu der Trägeranordnung in und entgegen der Umfangsrichtung beweglich ist. Im vorliegenden Fall umfasst die Reibeinrichtung einen Reibring 80, der sich zwischen der den Träger 12 umfassenden Trägeranordnung und der Auslenkungsmasse 34 befindet. Der Reibring 80 ist innerhalb des in Fig. 2 vergrößerten dargestellten Bereichs 82 des in Fig. 1 a gezeigten Vergleichsbeispiels angeordnet, sodass zur Diskussion des vorliegenden Ausführungsbeispiels lediglich auf den in Fig. 2 vergrößert dargestellten Bereich dieses Ausführungsbeispiels Bezug genommen wird.

Dabei ist es unerheblich, an welchen der teilweise mehrteiligen, hier unter dem Begriff Trägeranordnung 12 und Auslenkungsmasse 34 bezeichneten Komponenten die Reibeinrichtung angeordnet ist. Wichtig ist, dass diese zwischen der relativ zueinander in Umfangsrichtung rotierbaren Trägeranordnung 12 und der Auslenkungsmasse 34 eine eine Schwingung dämpfende Reibung vermitteln kann. Mit anderen Worten kann, ähnlich wie die Auslenkungsmasse 34, auch der Träger, anders als in Fig. 1d schematisch dargestellt, aus mehreren Einzelteilen bestehen, sodass die Bezeichnung Trägeranordnung zutreffender wäre. Daher werden im Folgenden die Begriffe Träger und Trägeranordnung synonym verwendet, wobei darunter allgemein derjenige Teil der Drehschwingungsdämpfungsanordnung verstanden werden soll, der in Umfangsrichtung relativ zu der Auslenkungsmasse 34 drehbar ist.

Der Reibring 80 besitzt eine Reibfläche 84, mit welcher er an einer Gegenfläche an der Trägerscheibe 28 bzw. an einer mit dieser drehfest verbundenen Komponente anliegt. Zum Vermitteln einer Reibungskraft ist der Reibring 80 durch eine Tellerfeder 86 in der axialen Richtung 88 mit einer Kraft beaufschlagt, die die Reibfläche 84 an die Gegenfläche an der Trägerscheibe 28 presst. Entgegen der axialen Richtung 88 erstrecken sich von der Reibscheibe 80 mehrere Nasen 90 in Richtung der Trägerscheibe 28. Die Nasen 90 erstrecken sich insbesondere bis in zu den Nasen 90 korrespondierende Ausnehmungen 92 in den Trägerscheiben 28, sodass diese über die Ausnehmungen 92 drehbar mit den Trägerscheiben 28 bzw. der Auslenkungsmasse 34 koppelbar sind.

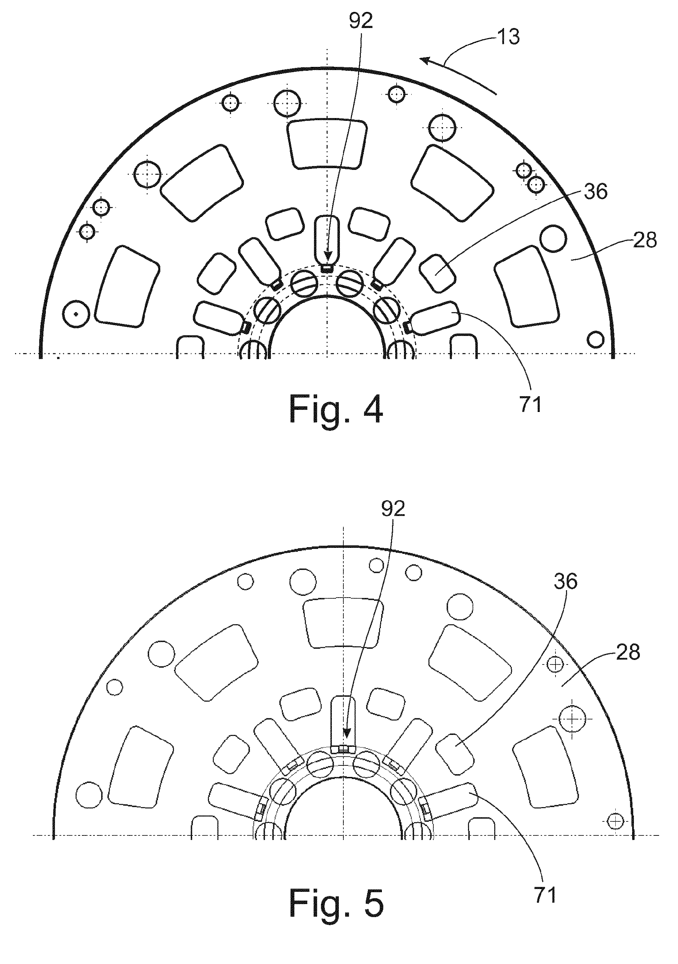

Die Fig. 4 und 5 zeigen jeweils eine Ansicht auf zwei unterschiedliche Ausführungsbeispiele einer Drehschwingungsdämpfungsanordnung 10, die sich insbesondere im Hinblick auf die Mitnahme des Reibrings 80 voneinander unterscheiden. Dabei ist die Trägerscheibe 28 jeweils in einer zu der Ansicht der Figur 1b korrespondierenden Ansicht dargestellt. Die Ausnehmungen 92 zur Mitnahme der Nasen 90 des Reibrings 80 befinden sich jeweils am radial inneren Ende der Führungsaussparungen 71 der Trägerscheibe 28.

Dabei zeigt Fig. 4 ein Ausführungsbeispiel, in dem die Mitnahme des Reibrings 80 spielfrei erfolgt, d. h. die Ausdehnung der Ausnehmung 92 in der Umfangsrichtung entspricht der Ausdehnung der Nasen 90 in der Umfangsrichtung, sodass diese bei einer Bewegung in und entgegen der Umfangsrichtung 13 sofort, d. h. spielfrei, mitgenommen wird und somit permanent eine die Schwingung der Auslenkungsmasse 34 bezüglich der Trägeranordnung 12 bedämpfende Reibungskraft zwischen Auslenkungsmasse 34 und der Trägeranordnung 12 erzeugt wird. Ein derartiger Tilger bzw. eine derartige Drehschwingungsdämpfungsanordnung 10 kann über einen breiten Frequenz- und Ordnungsbereich wirken. Die Drehschwingungsdämpfungsanordnung 10 führt bei kleinen Drehzahlen große und bei großen Drehzahlen kleine Schwingungsamplituden aus. Bei dem in Fig. 2 gezeigten Ausführungsbeispiel umfasst die drehbare Trägeranordnung sowohl den Träger 12 als auch eine Nabe zur Anbindung der Anordnung beispielsweise an eine Getriebeeingangswelle als auch das mit diesem drehfest verbundene Anbindungsbauteil 94 zur Anbindung der Drehschwingungsdämpfungsanordnung an ein Anfahrelement.

Dabei versteht es sich von selbst, dass der Reibungskoeffizient zwischen der Reibfläche 84 der Reibeinrichtung 80 und der Gegenanlauffläche den Anforderungen entsprechend passend gewählt werden kann. Mit anderen Worten kann der Reibring 80 aus einem beliebigen Material, beispielsweise aus einem metallischen Material oder einem Kunststoff bestehen, wobei bei alternativen Ausführungsbeispielen lediglich die Reibfläche 84 aus dem geeignet ausgewählten Material und der restliche Körper des Reibrings 80 inklusive der Nasen aus einem anderen Material bestehen kann.

Fig. 5 zeigt eine Ansicht auf ein weiteres Ausführungsbeispiel einer Drehschwingungsdämpfungsanordnung, bei der die Mitnahme des Reibrings 80 spielbehaftet ist. Um dies zu erreichen, erstrecken sich die Ausnehmung 92 in der Trägerscheibe 28 in Umfangsrichtung 13 weiter als die Nasen 90. Dadurch wird in und entgegen der Umfangsrichtung 13 ein Spiel erzeugt, sodass die Reibeinrichtung bzw. der Reibring 80 nur dann eine Reibungskraft erzeugt, wenn eine Relativverdrehung zwischen der Auslenkungsmasse 34 und der Trägeranordnung 12 erfolgt, die größer ist als der Freiwinkelbereich. Der Freiwinkelbereich ist somit gegeben durch die Differenz der Ausdehnung Ausnehmung 92 in der Umfangsrichtung und der Ausdehnung der korrespondierenden Nase 90.

Mit anderen Worten weist die Ausnehmung 92 gegenüber der Nase 90 des Reibrings 80 bei dem in Fig. 5 gezeigten Ausführungsbeispiel, bezogen auf eine Ruhelage, ein Verdrehspiel in jede Verdrehrichtung auf. Dadurch ist eine Schwingung bzw. eine Relativbewegung der Auslenkungsmasse 34 zu der Trägeranordnung 12 innerhalb eines festlegbaren Verdrehwinkels, beispielsweise innerhalb von +/- 5 Grad, reibungsfrei, was zu einer sehr guten Schwingungsdämpfung führen kann. Wird aufgrund einer sehr großen Anregung dieser Freiwinkel bzw. dieser Winkel überschritten, entzieht die Reibeinrichtung 80 der Schwingungsdämpfungsanordnung bzw. dem schwingungsfähigen System derselben Energie und verhindert so große Winkelausschläge und die Zerstörung oder Anschlaggeräusche des Tilgers.

Bei dem in Fig. 2 gezeigten Ausführungsbeispiel, bei dem mehrere Nasen 90 entlang des Umfangs des Reibrings 80 angeordnet sind, wird der Reibring 80 über die Nasen zentriert. Bei alternativen Ausführungsbeispielen mit weniger Nasen sind wenigstens zwei Nasen vorgesehen, um eine hinreichende Zentrierung zu gewährleisten. Alternativ dazu kann bei weiteren Ausführungsbeispielen der Reibring 80 auch anders, beispielsweise über seinen Innendurchmesser, an einem auf dem Anbindungsbauteil 94 angebrachten Absatz zentriert werden, sodass die Nasen 90 lediglich der Drehmitnahme dienen, was zu einer gewichtssparenderen Auslegung der Nasen bzw. des Reibrings 80 führen kann.

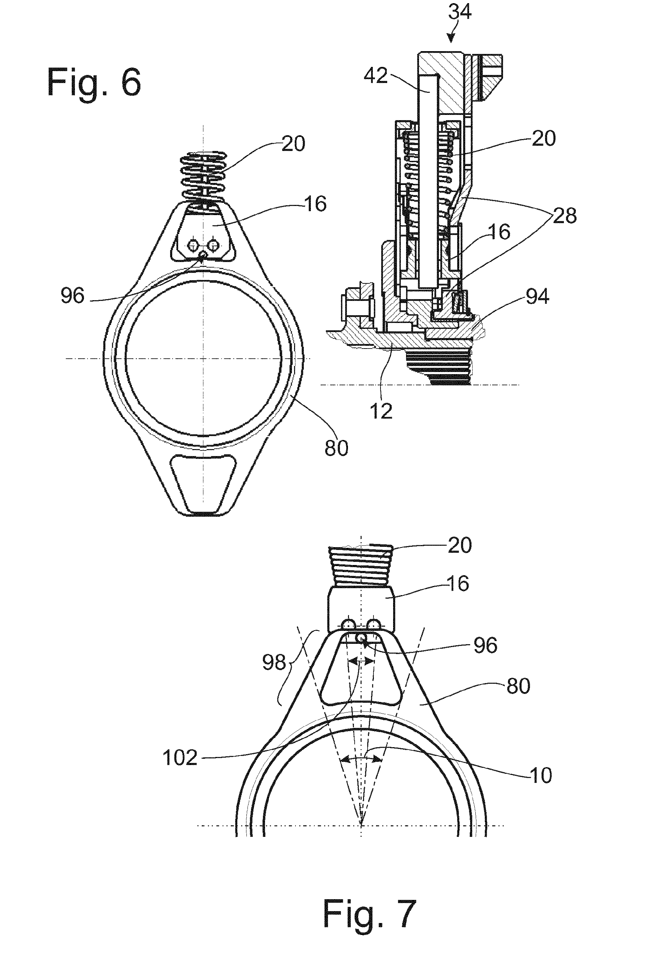

Die Fig. 6 und 7 zeigen einen Reibring 80 eines weiteren Ausführungsbeispiels der vorliegenden Erfindung, bei dem die Reibeinrichtung 80 nur außerhalb eines Freiwinkelbereichs einer Relativverdrehung zwischen der Trägeranordnung und der Auslenkungsmasse 34 eine Reibungskraft bewirkt, wobei der Freiwinkelbereich bzw. dessen Größe zusätzlich von der Drehzahl der Trägeranordnung 12 abhängig ist.

Um dies zu ermöglichen, ist an zwei gegenüberliegenden Abstützelementen 16 jeweils eine sich in der axialen Richtung 88 erstreckende Nase 96 angeordnet, die sich in eine in der radialen Richtung erstreckende Ausnehmung eines Mitnahmebauteils 98 erstreckt, das mit dem Reibring 80 drehfest verbunden ist. Das heißt, bei dem in den Fig. 6 und 7 gezeigten Ausführungsbeispiel wird die Drehmitnahme des Reibrings 80 über die Nase 96 an dem Abstützelement 16 bewirkt. Dabei ist der Freiwinkelbereich abhängig von der Kontur der Ausnehmung in dem Mitnahmebauteil 98. Dabei ist zunächst zu bemerken, dass, wenngleich in den Fig. 6 und 7 das Mitnahmebauteil 98 einstückig mit dem Reibring 80 dargestellt ist, alternative Ausführungsbeispiele auch aus mehreren drehfest miteinander gekoppelten Bauteilen bestehen können. Um zu bewirken, dass der Freiwinkelbereich mit zunehmender Drehzahl, d. h. mit zunehmend radial außen liegender Position des Abstützelements 16 geringer wird, verringert sich die Ausdehnung der Ausnehmung mit zunehmendem radialen Abstand vom Zentrum in der Umfangsrichtung. Das heißt, der Freiwinkelbereich wird mit zunehmender radialer Position des Abstützelements 16 geringer, wie in Fig. 7 dargestellt, wo ein erster Freiwinkelbereich 100 zu niedrigen Drehzahlen korrespondiert, bei denen das Abstützelement 16 in seiner radial inneren Ruheposition befindlich ist. Der kleinere zweite Freiwinkelbereich 102 entspricht einer Situation bei hohen Drehzahlen, wo sich das Abstützelement 16 radial weit außen befindet.

Das heißt, die Fig. 6 und 7 zeigen ein Ausführungsbeispiel der Erfindung, bei dem eine drehzahlabhängige Spielreibung zwischen der Auslenkungsmasse 34 und der Trägeranordnung 12 erreicht wird. Dabei weisen wenigstens einer, vorzugsweise zumindest zwei Gleitsteine bzw. Abstützelemente 16 eine Mitnehmernase 96 auf, die innerhalb einer Steuerkontur eines Mitnahmebauteils 98 des Reibrings 80 sitzt. Die Steuerkontur ist so bemessen, dass die Nase 96 innerhalb des zulässigen Freiwinkels nicht zur Anlage kommt, sodass der Reibring 80 nicht mitgenommen wird. Erst bei Überschreiten dieses zulässigen Freiwinkels wird der Reibring 80 von der Trägeranordnung mitgenommen und reibt auf einer mit dem Trägerbauteil 28 der Auslenkungsmasse 34 verbundenen Gegenreibfläche. Um den Freiwinkel bei höheren Drehzahlen zu verringern, verjüngt sich die Steuerkontur nach radial außen hin.

Wie in Fig. 7 dargestellt wird bei hoher Drehzahl die Sensorfeder 20 durch die Fliehkraft des Abstützelements 16 komprimiert und die Nase 96 befindet sich radial weit außen innerhalb des engeren Bereichs der Steuerkontur, sodass der Reibring 80 bei einem kleineren Winkel der Relativverdrehung zwischen Trägeranordnung und Auslenkungsmasse 34 als bei geringerer Drehzahl reiben kann.

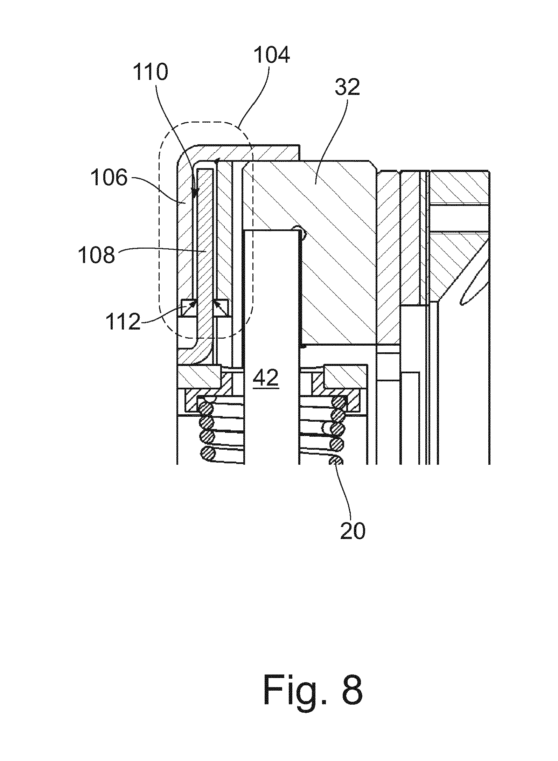

Fig. 8 zeigt ein weiteres Ausführungsbeispiel der vorliegenden Erfindung, bei dem die Reibeinrichtung eine hydraulische Dämpfungsanordnung 104 umfasst, bei der die Reibung zwischen der Trägeranordnung 12 und der Auslenkungsmasse 34 also hydraulisch erzeugt wird. Ein erstes Scheibenelement 106 ist drehfest mit der Auslenkungsmasse 34 bzw. dem Massering 32 gekoppelt, wohingegen ein zweites Scheibenelement 108 drehfest mit der Trägeranordnung 12 gekoppelt ist. Das heißt, das erste und das zweite Scheibenelement 106 und 108 liegen sich in der axialen Richtung auf unterschiedlichen Seiten eines mit Fluid gefüllten Spalts 110 gegenüber. Der mit Fluid gefüllte Spalt 110 wirkt als Scherspalt, durch den eine Relativbewegung zwischen dem ersten und dem zweiten scheibenförmigen Element 106 und 108 gehemmt wird, sodass eine Schwingung zwischen der Rückstellmasse 34 und der Trägeranordnung 12 gedämpft werden kann. Wenngleich in Fig. 8 eine einfache Anordnung mit lediglich einer Lamelle bzw. einem scheibenförmigen Element 108 auf Seiten der Trägeranordnung 12 und zwei dazu korrespondierenden Lamellen auf Seiten der Auslenkungsmasse 34 dargestellt ist, versteht es sich von selbst, dass bei alternativen Ausführungsbeispielen eine Mehrzahl von Lamellen bzw. scheibenförmigen Elementen verwendet werden kann.

Zur Füllung des Spalts 110 mit einer Flüssigkeit kann beispielsweise ein Öl verwendet werden, sodass die die hydraulische Dämpfungseinrichtung kennzeichnende geschwindigkeitsproportionale Dämpfung bei einer Relativverdrehung der beiden auf unterschiedlichen Seiten des Scherspalts bzw. Spalts 110 angeordneten scheibenförmigen Elemente auftritt. Bei Anfahrelementen, die hydrodynamische Anfahrelemente oder hydrodynamische Drehmomentwandler aufweisen, kann zur Dämpfung bzw. zur Erzeugung der Reibung das ohnehin im Wandlerkreislauf befindliche Öl verwendet werden.

Für trocken laufende Systeme zeigt Fig. 8 eine alternative Ausführungsform, bei der zwischen dem ersten Scheibenelement 106 und dem zweiten Scheibenelement 108 eine ringförmige Dichtung 112 angeordnet ist, um das Dämpfungsöl bzw. die Flüssigkeit innerhalb des Spalts 110 zu halten.

Es versteht sich von selbst, dass die Anbindung der einzelnen scheibenförmigen Elemente an die Auslenkungsmasse 34 bzw. die Trägeranordnung 12 auf jedwede beliebige mechanische Art und Weise form-, stoff- oder kraftschlüssig erfolgen kann.

Formschlüssig bedeutet in diesem Zusammenhang, dass eine Verbindung, die eine Relativbewegung der miteinander verbundenen Komponenten in zumindest einer Verbindungsrichtung verhindert, dadurch bewirkt wird, dass die Geometrie der zur Verbindung verwendeten Komponenten derart gewählt wird, dass diese sich in einer Richtung senkrecht zur Verbindungsrichtung überschneiden, um derart die Bewegung in der Verbindungsrichtung zu verhindern. Kraftschlüssig bedeutet in diesem Zusammenhang, dass eine Verbindung, die eine Relativbewegung der miteinander verbundenen Komponenten in zumindest einer Richtung verhindert, durch eine zwischen den Komponenten senkrecht zur Verbindungsrichtung wirkende Kraft, die beispielsweise zu erhöhten Kohäsions- oder Adhäsionskräften führt, bewirkt wird. Ein Kraftschluss liegt insbesondere so lange vor, wie eine durch die Haftreibung bewirkte Kraft zwischen den Komponenten nicht überschritten wird. Stoffschlüssig bedeutet in diesem Zusammenhang, dass eine Verbindung, die eine Relativbewegung der miteinander verbundenen Komponenten in zumindest einer Richtung verhindert, über atomare oder molekulare Kräfte vermittelt wird. Dabei kann zumindest teilweise eine Vermischung der Materialen der verbundenen Komponenten an einer Grenzfläche erfolgen. Diese muss nicht ausschließlich zwischen den Materialen der verbundenen Komponenten allein erfolgen. Vielmehr kann zusätzlich eine die Vermischung bewirkende oder unterstützende Materialkomponente, beispielsweise in Form eines Klebstoffes oder eines Materials eines Schweißdrahtes vorhanden sein, sodass an der Grenzfläche eine Mehrzahl von Materialen im mikroskopischen Maßstab miteinander vermischt sind.

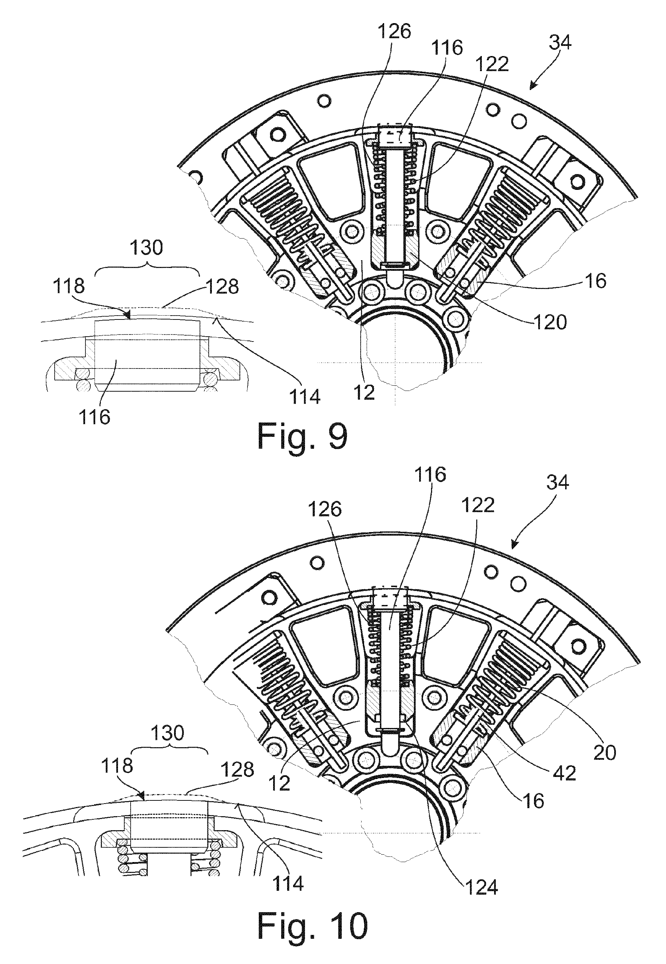

Fig. 9 und 10 zeigen ein weiteres Ausführungsbeispiel der vorliegenden Erfindung, bei dem die Reibeinrichtung eine von der Drehzahl der Trägeranordnung abhängige Reibungskraft erzeugt. Dabei zeigt die Fig. 9 eine Ansicht der Drehschwingungsdämpfungsanordnung bei niedriger Drehzahl und die Fig. 10 dieselbe Ansicht bei hoher Drehzahl, wobei jeweils zum besseren Verständnis ergänzende Ausschnittsvergrößerungen einer Anlauffläche 114 an der Auslenkungsmasse 34 dargestellt sind, an der ein Reibelement 116 bzw. eine nach radial außen weisende Reibfläche 118 des Reibelements 116 mit der Anlauffläche 114 in Kontakt kommen kann.

Dem Reibelement 116 ist ein radial relativ zu der Trägeranordnung 12 bewegliches Abstützelement 120 zugeordnet, welches das Reibelement 116 bzw. ein sich entgegen der radialen Richtung nach innen zylindrisch erstreckendes Teil des Reibelements 116 in und entgegen der Umfangsrichtung 13 bezüglich der Trägeranordnung 12 abstützt. Das heißt, das dem Reibelement 116 zugeordnete Abstützelement 120 hat eine dem Abstützelement 16 der Rückstellelemente 42 vergleichbare Funktion und ist unter dem Einfluss der Schwerkraft entgegen der Wirkung einer Sensorfeder 122 nach radial außen beweglich. In der in Fig. 9 dargestellten Ruheposition des Abstützelements 120 befindet sich das Abstützelement 120 bei niedrigen Drehzahlen radial innen und verhindert über einen innerhalb des Abstützelements 120 angeordneten Absatz 124, dass das Reibelement 116 sich nach radial außen bewegen kann. Bei dem Erreichen einer vorbestimmten, von der Abstimmung der Sensorfeder 122 und dem Gewicht des Abstützelements 120 abhängigen Grenzdrehzahl bewegt sich das Abstützelement 120 nach radial außen und gibt das Reibelement 116 frei, das sich ab Erreichen dieser Grenzdrehzahl ebenfalls nach radial außen bewegen kann, sodass die Reibfläche 118 in Kontakt mit der Anlauffläche 114 gerät und eine Dämpfung der Schwingung bzw. der Relativbewegung zwischen Trägerelement 12 und Auslenkungsmasse 34 erfolgt. Um die Erzeugung der Reibungskraft durch das Reibelement 116 weiter zu beeinflussen bzw. einen Kraftverlauf zu definieren, der zu der gewünschten Auslegung korrepsondiert, ist das Reibelement 116 über eine Federanordnung 126 mit dem Abstützelement 120 verbunden, d. h. von dem Federelement 126 wird eine zusätzliche nach radial außen wirkende Kraft auf das Reibelement 116 ausgeübt.

Mit anderen Worten kann die in Fig. 9 und 10 dargestellte Reibeinrichtung anstelle einer Anordnung aus Vorspannfeder 20 und Abstützelement 16 in einem in den Fig. 1 a - 1 e beschriebenen Drehschwingungsdämpfer eingesetzt werden, wobei es zur Vermeidung von Unwuchten von Vorteil sein kann, wenigstens zwei Einheiten versetzt zueinander bzw. einander gegenüberliegend anzuordnen.

Die Reibeinrichtung besteht also aus einem Gleitstein bzw. einem Abstützelement 120 und einem Reibelement 116, das einen sich nach radial innen erstreckenden zylindrischen Stempelbereich aufweist, an dessen radial außen liegendem Ende die Reibfläche 118 angeordnet ist. Dabei können der Reibelementstempel bzw. das die Reibfläche 118 tragende Kopfteil einstückig oder mehrteilig ausgeführt sein. Bei niedriger Drehzahl wird der Reibelementstempel über seinen radialen Endanschlag bzw. durch den Absatz 124 im Abstützelement 120 durch die Vorspannfeder 20 nach radial innen gedrückt. Das heißt, die Reibfläche 118 liegt nicht am Massering 32 bzw. an der Anlauffläche 114 an, sodass eine Schwingung ungedämpft erfolgen kann.

Die Federanordnung 126 zum Andrücken der Reibfläche 118 an die Anlauffläche 114 kann dazu verwendet werden, über den gesamten möglichen radialen Verstellbereich des Abstützelements 120 eine genau dimensionierte Normalkraft auf das Reibelement 116 auszuüben. Je nach Verhältnis der Federraten bzw. Steifigkeiten der Sensorfeder bzw. der Vorspannfeder 20 und der Andrückfeder bzw. der Federanordnung 126 ergibt sich ein Normalkraftverlauf über der Drehzahl, der beliebig angepasst werden kann. Insbesondere kann dieser bei einigen Ausführungsbeispielen auch so ausgelegt werden, dass die Normalkraft zumindest in einem Teilbereich des Drehzahlbandes konstant oder auch Null sein kann. Dadurch kann in vorteilhafter Weise eine Dämpfung beispielsweise erst in kritischen Drehzahlbereichen beginnen, in denen der Tilger bzw. die Drehschwingungsdämpfungsanordnung vor zu großen Winkelausschlägen zu schützen ist, bzw. dann, wenn eine Dämpfungswirkung nicht mehr erforderlich ist. Wie in der vergrößerten Darstellung von Fig. 9 erkennbar ist, liegt bei niedrigen Drehzahlen ein Spalt zwischen dem Reibelement 116 und der Anlauffläche 114 an der Auslenkungsmasse vor, der erst mit zunehmender Drehzahl geschlossen wird, wie in Fig. 10 zu sehen ist.

Die Fig. 9 und 10 zeigen in einer gestrichelten Darstellung eine alternative Anlauffläche 128 gemäß einem weiteren Ausführungsbeispiel der vorliegenden Erfindung, in dem die Anlauffläche 128 eine sich über den Freiwinkelbereich 130 erstreckende Ausnehmung aufweist, die sich nach radial außen in die Anlauffläche 114 erstreckt. Gemäß diesem Ausführungsbeispiel wird es ermöglicht, dass die von der Reibeinrichtung 116 erzeugte Reibungskraft nicht nur von der Drehzahl abhängig ist, sondern darüber hinaus drehzahlunabhängig über einen Freiwinkelbereich 130 verfügt, in dem unabhängig von der Drehzahl eine Dämpfung nicht stattfindet. Dies ermöglicht es, Ausführungsbeispiele erfindungsgemäßer Drehschwingungsdämpfungsanordnungen noch genauer an die Erfordernisse eines Antriebsstrangs anzupassen, um so zu optimalen Ergebnissen für die Dämpfung von Drehungleichförmigkeiten zu gelangen.

Wie aus Fig. 10 hervorgeht, ist auch bei den alternativen Ausführungsbeispielen das Abstützelement bei erhöhter Drehzahl radial nach außen gewandert. Da das Reibelement 116 nun nicht mehr über seinen radialen Endanschlag im Absatz 124 gehalten wird, kann das Reibelement 116 mit seiner Reibfläche 118 prinzipiell in Kontakt bzw. zur Anlage mit der Anlauffläche 114 geraten. Dies wird jedoch innerhalb des Freiwinkelbereichs 130 durch die Ausnehmung bzw. Freistellung in der Anlauffläche 114 verhindert, so dass die Reibung erst oberhalb eines frei bestimmbaren Freiwinkels wirken kann.

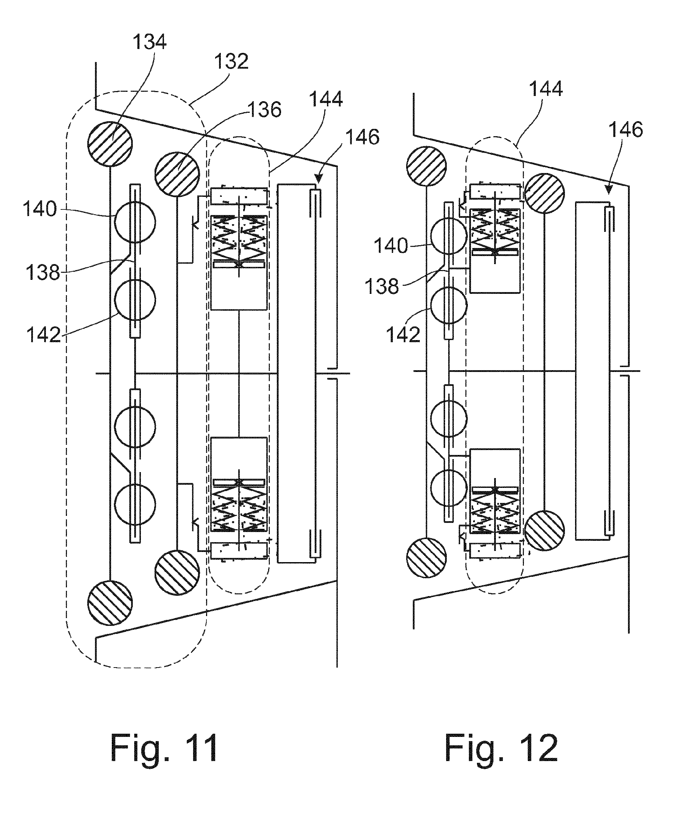

Die Fig. 11 und 12 zeigen jeweils in schematischer Darstellung einen Ausschnitt aus einem Ausführungsbeispiel eines Antriebsstrangs eines Fahrzeugs, bei dem zumindest eine Drehschwingungsdämpfungsanordnung 144 gemäß einem Ausführungsbeispiel der Erfindung verbaut ist. Dabei sind der Übersichtlichkeit der Darstellung halber die einzelnen Komponenten lediglich schematisch und nicht in konstruktiver Ausführung dargestellt.

Fig. 11 zeigt einen zweistufigen Drehschwingungsdämpfer 132, der eine Primärseite mit zugeordneter Primärmasse 134 sowie eine Sekundärseite mit zugehöriger Sekundärmasse 136 aufweist. Ein Zwischenelement 138 ist gegen die Rückstellwirkung einer ersten Federanordnung 140 bezüglich der Primärseite drehbar und die Sekundärseite ist gegen die Rückstellwirkung einer zweiten Federanordnung 142 bezüglich dem Zwischenelement drehbar. Die Einleitung des zu übertragenden Drehmoments erfolgt von Seiten der Primärmasse bzw. von der Primärseite.

Ein Ausführungsbeispiel einer Drehschwingungsdämpfungsanordnung 144 ist sekundärseitig an den Drehschwingungsdämpfer 132 angebunden, d. h. die Trägeranordnung der Drehschwingungsdämpfungsanordnung 144 ist drehfest mit der Sekundärseite bzw. den Sekundärmassen 136 des Drehschwingungsdämpfers 132 gekoppelt. Ferner ist abtriebsseitig eine Kupplungsanordnung 146 mit der Trägeranordnung der Drehschwingungsdämpfungsanordnung 144 gekoppelt, um abtriebsseitig, beispielsweise in Richtung eines Getriebes, den Drehmomentfluss zu unterbrechen bzw. wiederherstellen zu können. Bei der in Fig. 11 gezeigte Anbindung der Drehschwingungsdämpfungsanordnung 144 an die Sekundärseite eines Dreh- bzw. Torsionsschwingungsdämpfers132, beispielsweise innerhalb eines Zwei-Massen-Schwungrades, kann oft die Drehschwingungsdämpfungsanordnung 144 vergleichsweise leicht gebaut werden, da die Restanregung an dem Ort der Anbindung der Drehschwingungsdämpfungsanordnung 144 hinter den in Reihe geschalteten Federsätzen 140 und 142 vergleichsweise klein werden kann.

Fig. 12 zeigt ein alternatives Ausführungsbeispiel, bei dem die Drehschwingungsdämpfungsanordnung 144 bzw. dessen Trägeranordnung drehfest mit dem Zwischenelement 138 gekoppelt ist, also zwischen dem inneren Federsatz 142 und dem äußeren Federsatz 140. Dies kann von Vorteil sein, wenn sich aufgrund der Schwingungsform hinter dem zweiten Federsatz 142 ein Schwingungsknoten ergibt, wodurch die Drehschwingungsdämpfungsanordnung zu wenig Anregung erfahren würde.

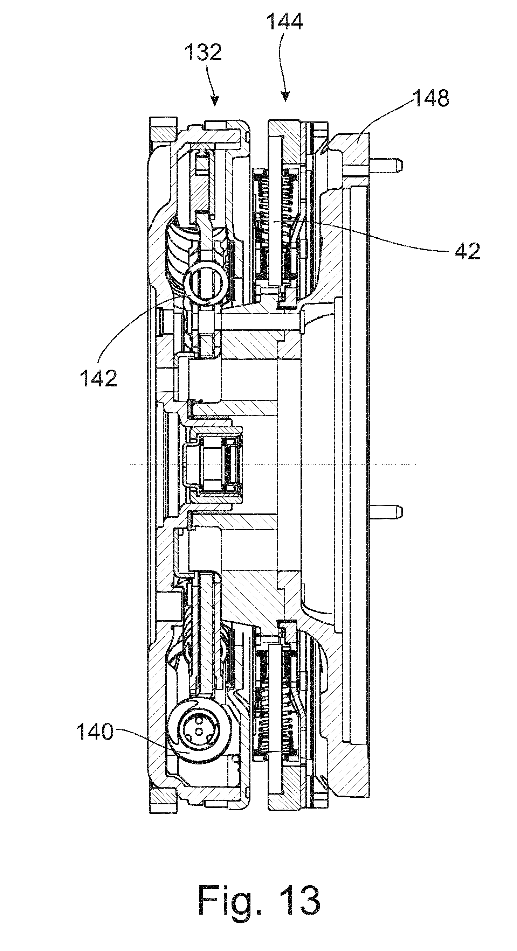

Fig. 13 zeigt einen Schnitt durch ein konstruktives Ausführungsbeispiel der vorliegenden Erfindung bzw. ein Beispiel für die konstruktive Anordnung der Drehschwingungsdämpfungsanordnung 144 wirkmäßig hinter dem zweiten Federsatz bzw. der zweiten Federanordnung 142 in einem Zwei-Massen-Schwungrad. Das heißt, die Drehschwingungsdämpfungsanordnung 144 bzw. die Tilgerbaugruppe ist zwischen dem Ausgang der zweiten Federanordnung 142 und einem Anbindungsbauteil 148 des Anfahrelements angeordnet, an das sich eine Kupplungsanordnung anschließen kann.

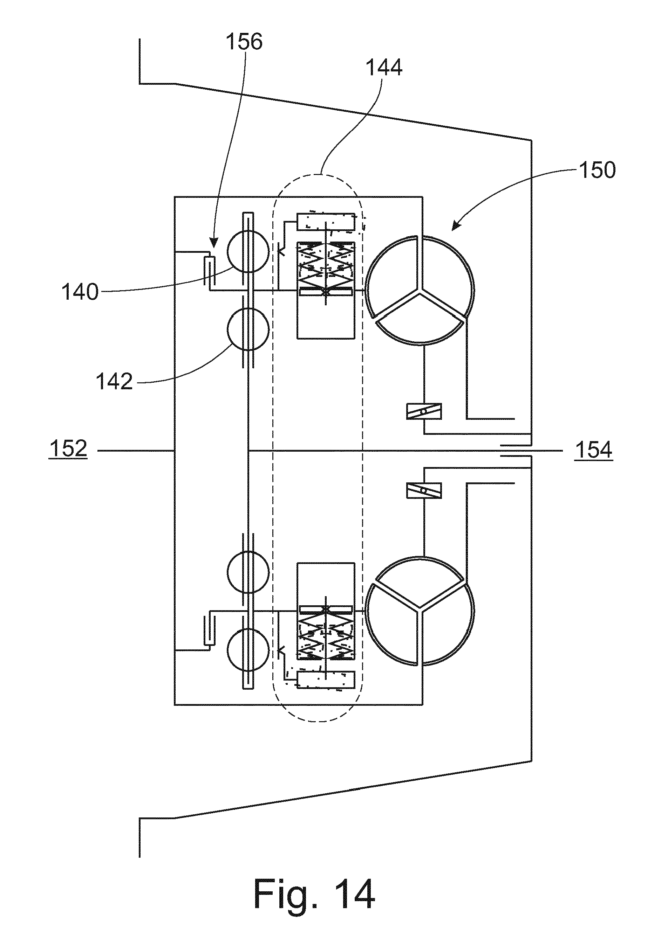

Fig. 14 zeigt schematisch ein weiteres Ausführungsbeispiel eines erfindungsgemäßen Antriebsstrangs mit einem Ausführungsbeispiel einer Drehschwingungsdämpfungsanordnung 144, wobei der Antriebsstrang ferner einen hydrodynamischen Wandler bzw. ein hydrodynamisches Anfahrelement 150 umfasst, über welches während des Anfahrens eines Fahrzeugs der Drehmomentschluss zwischen einer Antriebsseite 152 und einer Abtriebsseite 154 hergestellt wird, wohingegen nach dem Anfahren das hydrodynamische Anfahrelement 150 mittels einer Überbrückungskupplung 156 überbrückt wird, um die Strömungsverluste im Fahrbetrieb zu vermeiden. Auch bei dem in Fig. 14 gezeigten Ausführungsbeispiel ist die Trägeranordnung der Drehschwingungsdämpfungsanordnung 144 drehfest mit dem Zwischenelement 138 gekoppelt. Durch die große Masse des Zwischenelements 138 und die daraus entstehenden Eigenformen können bei der in Fig. 14 dargestellten Anordnung die Drehschwingungsdämpfungsanordnung 144 bei der in Fig. 14 dargestellten Anordnung besonders effizient Drehungleichförmigkeiten bedämpft bzw. unterdrückt werden.

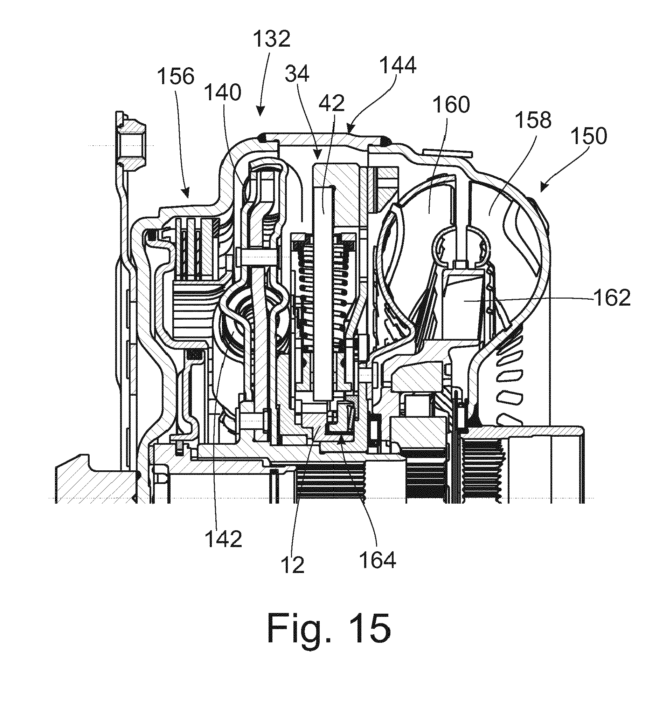

Fig. 15 zeigt eine konstruktive Ausführung eines Ausführungsbeispiels eines Antriebsstrangs, der, wie anhand von Fig. 14 bereits diskutiert, einen hydrodynamischen Drehmomentwandler mit einem Pumpenrad 158, einem Turbinenrad 160 und einem Leitrad 162 als hydrodynamisches Anfahrelement umfasst.

Bei der in Fig. 15 gezeigten konstruktiven Ausführungsform ist, anders als bei der schematisch in Fig. 14 dargestellten Darstellung, die Drehschwingungsdämpfungsanordnung 144 hinter den in Reihe geschalteten Federanordnungen 140 und 142 angebunden. Das heißt, ein Träger der Trägeranordnung 12 der Drehschwingungsdämpfungsanordnung 144 ist drehfest mit der Sekundärseite des Drehschwingungsdämpfers 132 gekoppelt, was teilweise eine leichte Konstruktion der Drehschwingungsdämpfungsanordnung 144 ermöglicht. In beiden Fällen ist die Drehschwingungsdämpfungsanordnung 144 mit einer Reibeinrichtung 164 bedämpft, um im Falle einer Resonanz/Überlastung durch Spitzenmomente oder zu hohe Momente in der Drehschwingungsdämpfungsanordnung 144 die Zerstörung derselben zu verhindern, da diese der Drehschwingungsdämpfungsanordnung Schwingungsenergie entzieht, um ein Anschlagen bzw. eine Zerstörung derselben zu vermeiden.

Wenngleich vorhergehend überwiegend für den Antriebsstrang eines PKWs diskutiert, versteht es sich von selbst, dass Ausführungsbeispiele von Drehschwingungsdämpfungsanordnungen auch in beliebigen anderen rotierenden Systemen, beispielsweise von Landmaschinen, LKWs oder stationären Aggregaten verwendet werden können.

### Bezugszeichen

- 10: Drehschwingungsdämpfungsanordnung
- 12: Träger
- 13: Umfangsrichtung
- 14: Führung
- 16: Abstützelement
- 18: Anschlag
- 20: Vorspannfeder
- 22: ringartiger Randbereich des Trägers
- 24: Radiallager
- 26: Axiallager
- 28: Trägerscheibe
- 30: Massering
- 32: Massering
- 34: Auslenkungsmasse
- 36: langgestreckte Aussparungen
- 38: Axialsicherungsring
- 40: Bolzen
- 42: Rückstellelement
- 50: radial innerer Endbereich
- 52: Öffnung
- 54: Stift
- 56: Stift
- 58: erster Umfangsabstützbereich
- 60: zweiter Umfangsabstützbereich
- 68: Führungsvorsprung
- 71: Führungsaussparung
- 72: Auslenkungsmassenpendeleinheit
- 80: Reibring
- 84: Reibfläche
- 86: Tellerfeder
- 88: axiale Richtung
- 90: Nase
- 92: Ausnehmungen
- 94: Anbindungsbauteil
- 96: Nase
- 98: Mitnahmebauteil
- 100: erster Freiwinkelbereich
- 102: zweiter Freiwinkelbereich
- 104: hydraulische Dämpfungsanordnung
- 106: erstes Scheibenelement
- 108: zweites Scheibenelement
- 110: Spalt
- 112: ringförmige Dichtung
- 114: Anlauffläche
- 116: Reibelement
- 118: Reibfläche
- 120: Abstützelement
- 122: Sensorfeder
- 124: Absatz
- 126: Federanordnung
- 128: alternative Anlauffläche
- 130: Freiwinkelbereich
- 132: Drehschwingungsdämpfer
- 134: Primärmasse
- 136: Sekundärmasse
- 138: Zwischenelement
- 140: ersten Federanordnung
- 142: zweiten Federanordnung
- 144: Drehschwingungsdämpfungsanordnung
- 146: Kupplungsanordnung
- 148: Anbindungsbauteil
- 150: hydrodynamisches Anfahrelement
- 152: Antriebsseite
- 154: Abtriebsseite
- 156: Überbrückungskupplung
- 158: Pumpenrad
- 160: Turbinenrad
- 162: Leitrad
- 164: Reibeinrichtung

## Patentansprüche

1. Drehschwingungsdämpfungsanordnung (144), insbesondere für einen Antriebsstrang eines Fahrzeugs, umfassend:
eine um eine Drehachse drehbare Trägeranordnung (12);
eine zu der Trägeranordnung (12) in einer Umfangsrichtung (13) relativ bewegliche Auslenkungsmasse (34);
eine Mehrzahl von sich zumindest im Wesentlichen radial erstreckenden elastisch deformierbaren Rückstellelementen (42), mittels derer die Trägeranordnung (12) und die Auslenkungsmasse (34) relativ zueinander verdrehbar gekoppelt sind;
**dadurch gekennzeichnet, dass**
eine Reibeinrichtung (80; 104; 116; 164) zwischen der Trägeranordnung (12) und der Auslenkungsmasse (34) angeordnet ist, um bei einer Relativverdrehung zwischen der Trägeranordnung (12) und der Auslenkungsmasse (34) eine die Verdrehung hemmende Reibungskraft zwischen der Trägeranordnung (12) und der Auslenkungsmasse (34) zu erzeugen.

2. Drehschwingungsdämpfungsanordnung (144) nach Anspruch 1, wobei die Reibeinrichtung (80; 104; 164) nur außerhalb eines Freiwinkelbereichs (100, 102; 130) einer Relativverdrehung zwischen der Trägeranordnung (12) und der Auslenkungsmasse (34) eine Reibungskraft bewirkt.

3. Drehschwingungsdämpfungsanordnung (144) nach Anspruch 2, wobei der Freiwinkelbereich (100, 102; 130) kleiner 10°, bevorzugt kleiner 8° ist.

4. Drehschwingungsdämpfungsanordnung (144) nach einem der vorhergehenden Ansprüche, wobei der Freiwinkelbereich (100, 102) von der Drehzahl der Trägeranordnung (12) abhängig ist.

5. Drehschwingungsdämpfungsanordnung (144) nach Anspruch 4, wobei der Freiwinkelbereich (100, 102) mit zunehmender Drehzahl kleiner wird.

6. Drehschwingungsdämpfungsanordnung (144) nach einem der vorhergehende Ansprüche, wobei die erzeugte Reibungskraft von einer Drehzahl der Trägeranordnung (12) unabhängig ist

7. Drehschwingungsdämpfungsanordnung (144) nach einem der vorhergehenden Ansprüche, wobei die Reibeinrichtung einen Reibring (80) umfasst, der mit einem ausgewählten Element aus der Gruppe der Trägeranordnung (12) und der Auslenkungsmasse (34) drehfest koppelbar ist und der mit einer Reibfläche (84) an einer Gegenfläche an einem anderen Element aus der Gruppe der Trägeranordnung (12) und der Auslenkungsmasse (34) anliegt.

8. Drehschwingungsdämpfungsanordnung (144) nach Anspruch 7, wobei der Reibring zumindest eine oder mehrere sich in einer axialen Richtung erstreckende Nasen (90) aufweist, die jeweils in dazu korrespondierende Ausnehmungen (92) an dem ausgewählten Element eingreifen, um ein drehfeste Kopplung zu bewirken.

9. Drehschwingungsdämpfungsanordnung (144) nach Anspruch 8, wobei eine Ausdehnung der Ausnehmungen (92) in einer Umfangsrichtung (13) größer ist als eine Ausdehnung der Nasen (90) in der Umfangsrichtung.

10. Drehschwingungsdämpfungsanordnung (144) nach einem der vorhergehenden Ansprüche, die ferner zumindest ein einem Rückstellelement (42) zugeordnetes radial relativ zu dem Rückstellelement bewegliches Abstützelement (16) aufweist, mittels dessen das Rückstellelement (42) an einer radialen Position des Abstützelements (16) in der Umfangsrichtung (13) bezüglich der Trägeranordnung (12) abgestützt wird, wobei das Abstützelement (42) eine sich in der axialen Richtung (88) erstreckende Nase (96) aufweist, welche in eine sich in der radialen Richtung erstreckende Ausnehmung eines Mitnahmebauteils (98) eingreift, das mit dem Reibring drehfest (80) verbunden ist.

11. Drehschwingungsdämpfungsanordnung (144) nach Anspruch 10, bei der sich eine Ausdehnung der Ausnehmung in der Umfangsrichtung (13) von radial innen nach radial außen verringert.

12. Drehschwingungsdämpfungsanordnung (144) nach einem der vorhergehenden Ansprüche, wobei die Reibeinrichtung (104) eine hydraulische Dämpfungsanordnung umfasst, die zumindest ein erstes Scheibenelement (106), das mit einem Element aus der Gruppe der Trägeranordnung (12) und der Auslenkungsmasse (34) drehfest gekoppelt ist und ein zweites Scheibenelement (108), das mit einem anderen Element der Gruppe der Trägeranordnung (12) und der Auslenkungsmasse (34) drehfest gekoppelt ist, umfasst, wobei sich das erste Scheibenelement (106) und das zweite Scheibenelement (108) in der axialen Richtung (88) auf unterschiedlichen Seiten eines mit einem Fluid gefüllten Spaltes (110) gegenüberliegen.

13. Drehschwingungsdämpfungsanordnung (144) nach einem der Ansprüche 1 bis 5, wobei die erzeugte Reibungskraft von einer Drehzahl der Trägeranordnung (12) abhängig ist.

14. Drehschwingungsdämpfungsanordnung (144) nach Anspruch 13, wobei die Reibeinrichtung ein radial bewegliches Reibelement (116) umfasst, das drehfest mit der Trägeranordnung (12) gekoppelt ist und eine in der radialen Richtung nach außen weisende Reibfläche (118) aufweist, die mit einer radial außen liegenden Anlauffläche (114; 128) an der Auslenkungsmasse (34) in Kontakt bringbar ist.

15. Drehschwingungsdämpfungsanordnung (144) nach Anspruch 14, wobei der Kontakt erst ab einer vorbestimmten Grenzdrehzahl erfolgt.

16. Drehschwingungsdämpfungsanordnung (144) nach Anspruch 15, die zumindest ein dem Reibelement (116) zugeordnetes radial relativ zu der Trägeranordnung (12) bewegliches Abstützelement (120) aufweist, mittels dessen das Reibelement (116) an einer radialen Position des Abstützelements (120) in und entgegen der Umfangsrichtung (13) bezüglich der Trägeranordnung (12) abgestützt wird, wobei das Reibelement (116) über eine eine radial nach außen wirkende Kraft vermittelnde Federanordnung (126) mit dem Abstützelement (120) gekoppelt ist.

17. Drehschwingungsdämpfungsanordnung (144) nach Anspruch 16, wobei das Abstützelement (120) entgegen der radialen Richtung mit einer Vorspannkraft beaufschlagt und in der radialen Richtung unter dem Einfluss einer rotationsbedingten Fliehkraft gegen die Wirkung der Vorspannkraft nach außen beweglich ist.

18. Drehschwingungsdämpfungsanordnung (144) nach einem der Ansprüche 14 bis 17, wobei die Anlauffläche (128) eine sich über den Freiwinkelbereich (130) erstreckende Ausnehmung aufweist, die sich nach radial außen in die Anlauffläche (128) erstreckt.

19. Drehschwingungsdämpfungsanordnung (144) nach einem der vorhergehenden Ansprüche, wobei ein Rückstellelement (42) eine Rückstellfeder, vorzugsweise eine in Umfangsrichtung (13) elastisch deformierbare Blatt- oder Stabfeder umfasst.

20. Antriebsstrang für ein Fahrzeug, umfassend wenigstens eine Drehschwingungsdämpfungsanordnung (144) nach einem der vorhergehenden Ansprüche.

21. Antriebsstrang nach Anspruch 20, **dadurch gekennzeichnet, dass** der Antriebsstrang ein Anfahrelement, vorzugsweise einen hydrodynamischen Drehmomentwandler (150) oder Fluidkupplung oder nasslaufende Reibungskupplung oder Trockenreibungskupplung (146) aufweist, wobei die wenigstens eine Drehschwingungsdämpfungsanordnung (144) im Bereich des Anfahrelements vorgesehen ist.

22. Antriebsstrang nach Anspruch 20 oder 21, **dadurch gekennzeichnet, dass** der Antriebsstrang wenigstens einen Drehschwingungsdämpfer (132) mit einer Primärseite und einer gegen die Rückstellwirkung einer Federanordnung (140, 142) bezüglich der Primärseite drehbaren Sekundärseite umfasst, wobei die Trägeranordnung (12) der wenigstens einen Drehschwingungsdämpfungsanordnung (144) drehfest an die Sekundärseite des Drehschwingungsdämpfers (132) angebunden ist.

23. Antriebsstrang nach Anspruch 22, **dadurch gekennzeichnet, dass** der wenigstens eine Drehschwingungsdämpfer (132) eine erste (140) und eine zweite (142) Federanordnungen aufweist, wobei ein Zwischenelement (138) gegen die Rückstellwirkung der ersten Federanordnung (140) bezüglich der Primärseite drehbar ist und die Sekundärseite gegen die Rückstellwirkung der zweiten Federanordnung (142) bezüglich dem Zwischenelement (138) drehbar ist.

24. Antriebsstrang nach Anspruch 23, wobei die Trägeranordnung (12) der wenigstens einen Drehschwingungsdämpfungsanordnung (144) drehfest an das Zwischenelement (138) des Drehschwingungsdämpfers (132) angebunden ist.
